# EUROPÄISCHE PATENTSCHRIFT

(11) **EP 1 953 519 B1**
(45) Veröffentlichungstag und Bekanntmachung des Hinweises auf die Patenterteilung: **24.04.2013**
(21) Anmeldenummer: 08100238.8
(22) Anmeldetag: 09.01.2008
(51) Int. Cl.: G01M 11/06

(54) **Verfahren und Vorrichtung zum Ausrichten eines Fahrzeug-Umfeldsensors**
Method and device for aligning a vehicle surroundings sensor
Procédé et dispositif d'alignement d'un capteur d'environnement de véhicule

(30) Priorität: 01.02.2007 DE 102007005084
(43) Veröffentlichungstag der Anmeldung: 06.08.2008
(73) Patentinhaber: ROBERT BOSCH GMBH, 70442 Stuttgart (DE)
(72) Erfinder: Nobis, Guenter, 72622, Nuertingen (DE); Uffenkamp, Volker, 71642, Ludwigsburg (DE)

(56) Entgegenhaltungen:
- EP-A- 0 863 413
- EP-A- 1 640 700
- WO-A-2006/057363
- DE-A1- 4 322 917
- DE-A1- 19 745 731
- DE-A1- 19 941 034
- DE-A1-102004 056 400
- JP-A- 63 186 123
- US-A- 5 210 589
- US-A- 6 134 792
- US-A1- 2004 049 930
- US-A1- 2005 041 847

## Beschreibung

Die Erfindung betrifft ein Verfahren und eine Vorrichtung mit einer Kamera und einer Auswerteeinrichtung zum Ausrichten eines Fahrzeug-Umfeldsensors oder Scheinwerfers an einem Fahrzeug.

Aus der DE 199 41 034 A1 ist eine Einstellvorrichtung mit einem Einstellgerät für Scheinwerfer oder für einen Abstandssensor eines Fahrzeuges und mit einer optischen Justiereinrichtung zum Ausrichten des Einstellgerätes relativ zu dem Fahrzeug bekannt. Durch Aufnahme von an dem Fahrzeug angeordneten Merkmalen ist während der Fahrt zu unterschiedlichen Zeitpunkten nach an sich bekannten trigonometrischen Beziehungen die Fahrachsrichtung berechenbar. Dabei sind zwei Kameras verwendet, die mechanisch stabil verbunden sind und die Verbindung ist zu kalibrieren. Des Weiteren ist eine Rückstrahl- oder Projektionswand zum Ausrichten des Scheinwerfers oder des Abstandssensors verwendet.

Der Erfindung liegt die Aufgabe zugrunde, ein einfaches Verfahren und eine einfache Vorrichtung zum Ausrichten eines Fahrzeug-Umfeldsensors oder Scheinwerfers anzugeben.

Diese Aufgabe wird mit den Merkmalen der Hauptansprüche gelöst. Erfindungsgemäß sind Daten zur Ermittlung einer

Die US-A-6 134 792 beschreibt eine Vorrichtung und ein Verfahren zur Bestimmung von räumlichen Parametern eines optischen Zielelementes, das mittels eines starren Radbefestigungselementes an einem Fahrzeugrad angebracht ist und zur Ausrichtung eines Rades dient.

Die EP-A-1 640 700 beschreibt ein Verfahren und eine Vorrichtung zur Einstellung von Scheinwerfern an Kraftfahrzeugen unter Verwendung eines Lichtsammelkastens. Eine Energieversorgung weist eine mit dem Lichtsammelkasten verfahrbare Kondensatorbatterie auf. Der Lichtsammelkasten und damit die Kondensatorbatterie sind in eine Ladeposition verfahrbar. Eine Ausrichtung eines zu wartenden Kraftfahrzeugs zu dem Lichtsammelkasten bezüglich einer Fahrachse oder einer Ebenen ist nicht näher erläutert.

Die JP 63 186123 A betrifft eine Vorrichtung zur Einstellung eines Scheinwerferlichtkegels. Um eine Ausdehnung eines auf eine Projektionsfläche geworfenen Scheinwerferlichtkegels auf eine vorgesehene Größe einzustellen, wird ein positionierbarer Spiegel in den Lichtstrahl zwischen dem Scheinwerfer und der Projektionsfläche verbracht. Dazu werden ein zu wartendes Fahrzeug in eine Wartungsposition verbracht und eine Positionierungseinrichtung in eine für diesen Fahrzeugtyp vorgesehene Stellung gebracht. Damit sind Positionierungseinrichtung und Fahrzeug definiert zueinander angeordnet. Wie diese vorgesehene Stellung ermittelt wird, ist nicht näher erläutert.

Die US 2007 / 0 296 961 A1, die zu der Patentfamilie der WO 2006/057363 A gehört, betrifft eine Vorrichtung zur Inspektion von Kraftfahrzeuglampen. Ein Hauptrechner dieser Vorrichtung weist ein Anschlusselement auf, das an einem Rechner in dem Kraftfahrzeug anschließbar ist. Wenn das Kraftfahrzeug die Wartungsposition erreicht hat, schaltet der Hauptrechner mittels des Anschlusselementes und des Rechners in dem Kraftfahrzeug die Lampen ein und aus oder lässt diese aufblinken und nimmt mittels der Kameras Bilder auf, um die Kraftfahrzeug Lampen zu überprüfen. Geprüft wird eine Funktion, nicht eine Dejustage der Kraftfahrzeug Lampen nach der Herstellung des betreffenden Kraftfahrzeugs.

Die US 2004/049930 A1 beschreibt eine Vorrichtung mit einem bildbearbeitenden Ausrichtgerät und einem Gestell zur Ausrichtung eines Radarsensors. Das bildbearbeitende Ausrichtgerät weist zwei Kameras auf. Das Gestell ist zwischen dem bildbearbeitenden Ausrichtgerät und einem zu wartenden Fahrzeug positionierbar. Eine Bezugsebene ist mittels vier optischer Zielelemente an Rädern des Kraftfahrzeugs und eine Fahrachse mittels zweier optischer Zielelemente an den Hinterrädern des zu wartenden Kraftfahrzeugs bestimmbar. Bilder werden während des Stillstands des Fahrzeugs aufgenommen. Das Gestell weist eine Stange und einen Spiegel auf einem Träger auf. Stange und Spiegel sind zueinander vorjustiert. Mittels zweier optischer Zielelemente an der Stange ist die Stange und damit der Träger des Gestells senkrecht zu der Fahrachse ausrichtbar. Der Spiegel weist an Vorder- und Rückseite eine Spiegelfläche auf. Durch Drehung des Trägers wird der Spiegel gedreht und eine Feineinstellung mittels der beiden optischen Zielelemente an der Stange und eines Lichtstrahles vorgenommen. Zwei Verfahrensschritte zur Justierung des Spiegels sind notwendig.

Die DE 197 45 731 A1 betrifft eine Fahrzeug-Scheinwerfer-Einstellvorrichtung. Als Maß für eine Justierung der Einstellvorrichtung soll die Fahrzeuglängsachse verwendet sein. Diese soll aus der Fahrzeugkontur, insbesondere aus Haltern, die an den Kraftfahrzeugrädern befestigt sind, ableitbar sein. Mittels dieser Halter ist ein Richtstrahler befestigt, der dann parallel zur Längsachse strahlen und dem gegenüber der Lichtkasten justierbar sein soll. Fahr- und Karosserieachse und die Anordnung von Halter und Richtstrahler sind nicht näher erläutert.

Die US 2005/041847 A1 beschreibt ein maschinelles Sehsystem zum Ausrichten eines Kraftfahrzeugrades, das ein Kraftfahrzeugwartungsgerät aufweist. Das maschinelle System zum Ausrichten eines Kraftfahrzeugrades weist des Weiteren Kameras und an den Kraftfahrzeugrädern montierbare optische Zielelemente auf, mittels derer unter anderem eine Fahrachse bestimmbar.ist. Das Kraftfahrzeugwartungsgerät weist Balken auf, an deren Ende in einer ersten Ausführungsform Kameras angeordnet sind. Diese können die optischen Zielelemente an den Kraftfahrzeugrädern erfassen. Mittels eines Computers, einer Software auf dem Computer und von den Kameras gelieferten Daten sind die Fahrachse und die Ausrichtung des Kraftfahrzeuges, des maschinellen Sehsystems und des Kraftfahrzeugwartungsgerät zueinander bestimmbar. Das dient dazu, einen Radarsensor auszurichten. In einer alternativen Ausführungsform sind optische Zielelemente an den Enden der Balken anstelle der Kameras montierbar.

Die DE 10 2004 056 400 A1 beschreibt ein Verfahren zur Dejustageerkennung eines Abstandssensors. Während der Anfahrt in eine Messposition wird die Fahrlinie messtechnisch erfasst und ein Anstellwinkel bestimmt. Mehrere Alternativen zur Feststellung des Anstellwinkels sind vorgeschlagen. Ein Reflektor an einer feststehenden Wand wird von dem Abstandssensor erfasst und Winkel und Abstand bestimmt. Unter Berücksichtigung des Anstellwinkels ist eine Justage ermöglicht.

Die US-A-5 210 589 betrifft ein Verfahren und eine Vorrichtung zur Kontrolle und gegebenenfalls zur Justage einer optischen Achse eines Kraftfahrzeugscheinwerferlichtbündels. Dazu weist die Vorrichtung einen Bildschirm innerhalb eines Kastens auf. Der Kasten ist mittels eines Verstellmechanik in x- und y-Richtung und der Bildschirm innerhalb des Kastens mittels einer Verschiebemechanik in z-Richtung verschiebbar. Zunächst wird der Kasten so verstellt, dass die optische Achse auf einen zentralen Punkt des Bildschirms ausgerichtet ist. Als nächstes wird der Bildschirm in z-Richtung verschoben. Die Abweichung aus dem Mittelpunkt definiert eine Abweichung der optischen Achse. Dann wird mittels einer Kamera, der Verstellmechanik, eines Rechners und eines Rechnerprogramms die Abweichung kalkuliert und eine Justage vorgenommen.

Die DE 43 22 917 A1 beschreibt ein Scheinwerferprüfsystem mit zumindest einer Projektionsfläche, auf die ein Scheinwerferlichtbündel eines Kraftfahrzeugs projizierbar ist. Ein Bild der Projektionswand wird in einer ersten Videokamera abgebildet und digitalisiert. Ein Bild der Kraftfahrzeugscheinwerfer wird in einer zweiten Videokamera abgebildet und ebenfalls digitalisiert. Digitalisierte Daten beider Videokameras werden verarbeitet, Zusammenhänge hergestellt und eine optische Achse des Scheinwerferlichtbündels wird gegebenenfalls korrigiert.

Die EP-A-0 863 413 betrifft ein Verfahren zum räumlichen Lokalisieren eines Marken tragenden Objektes. Positionen von Spuren der Marken auf einem durch eine Bildaufnahmeeinrichtung erstellten Bild werden bestimmt und dann werden ausgehend von den Positionen der Marken auf dem Bild die Positionen der Marken in Bezug auf die Bildaufnahmeeinrichtung im Raum bestimmt. Das Verfahren umfasst einen Schritt zur Verbesserung der Bestimmung von Positionen der Spuren auf dem Bild, indem ein Modell für die Spuren durch vorgebbare Funktionen, die geometrische Formen beschreiben, erstellt wird. Die Positionen werden von denjenigen Funktionen kalkuliert, welche die beste Übereinstimmung mit den Spuren ergeben. Die Übereinstimmung wird berechnet, indem eine Lichtstärkendifferenz auf dem Bild zwischen der Spur und der Formfunktion, die eine Gauss-Funktion der Lichtstärke mit variablen Parametern umfasst, minimiert wird.

Fahrbahnebene und einer Fahrachse des Fahrzeugs mittels der Kamera und dreier Messpunkte eines Passpunktsystems an dem Fahrzeug während einer Anfahrt erfassbar, eine Fahrbahnebene und eine Fahrachse ermittelbar, ist eine Justage-Hilfseinrichtung vor dem Fahrzeug-Umfeldsensor oder Scheinwerfer des Fahrzeugs platzierbar und mittels der Kamera und mindestens dreier Messpunkte eines zweiten Passpunktsystems an der Justage-Hilfseinrichtung bezüglich der Fahrachse und der Fahrbahnebene ausrichtbar, eine Ausrichtung des Fahrzeug-Umfeldsensors oder Scheinwerfers zur Justage-Hilfseinrichtung ermittelbar und der Fahrzeug-Umfeldsensor oder Scheinwerfer bei Vorliegen einer Fehlausrichtung ausrichtbar.

Die Erfassung einer dreidimensionalen Ausrichtung eines Objektes wie des Fahrzeugs oder der Justage-Hilfseinrichtung mit nur einer Kamera ist möglich, wenn mindestens drei Messpunkte an dem Objekt vorhanden sind, deren dreidimensionale Lage untereinander in einem lokalen Koordinatensystem bekannt ist. Die Messpunkte bilden dann ein so genanntes Passpunktsystem. Ist ein solches Passpunktsystem, auch als Passpunktfeld bezeichnet, auf dem Fahrzeug angeordnet, so sind Koordinaten der Fahrbahnbeziehungsweise .Messplatzebene sowie die Fahrachse des Fahrzeugs und somit das Fahrzeugkoordinatensystem ermittelbar. Für ein solches Passpunktfeld gilt die Randbedingung, dass die drei Messpunkte nicht auf einer Geraden liegen dürfen. Zweckmäßigerweise spannen die drei Messpunkte ein möglichst großes Dreieck auf, bei mehr als drei Messpunkten wird ein möglichst großes Vieleck aufgespannt. Bei mehr als drei Messpunkten ist es zudem vorteilhaft, die Messpunkte des Passpunkfeldes räumlich, also dreidimensional anzuordnen.

Während der Anfahrt auf den Messplatz ist durch Aufnahme mehrerer Bilder mittels der Kamera und Auswertung des Fahrzeugpasspunktsystems die dreidimensionale Bewegungsbahn des Fahrzeugs bestimmbar. Die Bewegungsbahn der Messpunkte definieren die Fahrbahn- beziehungsweise die Messplatzebene sowie die Fahrachse des Fahrzeugs, dass heißt das Fahrzeugkoordinatensystem. Bei stehendem Fahrzeug bleibt das Fahrzeugkoordinatensystem bestimmbar, wenn die Messpunkte an dem Fahrzeug fixiert bleiben.

Die Fahrachse ergibt sich aus der Verbindung von mindestens zwei Schnittpunkten des optischen Abbildungsstrahls eines auf dem Bildsensor abgebildeten Fahrzeug-Messpunktes mit der Fahrbahnebene aus mindestens zwei Bildern während der Anfahrt. Vorteilhaft wird die Fahrachse als ausgleichende Gerade mittels statistischen Auswerteverfahren bestimmt aus allen Bildern und allen Fahrzeug-Messpunkten.

Bei mehr als zwei Bildern während der Anfahrt kann eine Analyse der Geradlinigkeit der Fahrachse zur Überwachung des Messvorganges verwendet werden. Wird eine Kurvenfahrt erkannt, können entweder die Messdaten korrigiert werden oder der Anwender wird aufgefordert, die Messung zu wiederholen.

Fährt das Fahrzeug mit konstanter Geschwindigkeit auf einer ebenen Fahrbahn und erfolgt die Bildaufzeichnung mit konstanter Frequenz, ergeben sich Schnittpunkte mit einer ebenen Fahrbahn mit gleichem Abstand zueinander. Wenn die Messpunktabstände voneinander abweichen, wird eine Unebenheit der Fahrbahn erkennbar. Wird eine Fahrbahnunebenheit erkannt, können entweder die Messdaten korrigiert werden oder der Anwender wird aufgefordert, die Messung an einem anderen Messplatz zu wiederholen.

Durch das Fahrzeugpasspunktsystem ist die Kameraposition relativ zum Fahrzeugkoordinatensystem bestimmbar. Für eine mobile Kamera ist von daher eine Zuordnung von Koordinaten zwischen Kamera und Fahrbahnebene ermittelbar. Das bedeutet, auf eine feste Zuordnung von Kamera und Messplatz ist verzichtet und die Kamera sowie die Auswertereinrichtung sind an verschiedenen Messplätzen einsetzbar. Während der Anfahrt eines jeden Fahrzeugs ist kontinuierlich die Position und Lage der Kamera bestimmbar, so lange die Kamera die drei Messpunkte an dem Fahrzeug sieht. Allfällige Vibrationen, hervorgerufen durch Arbeiten in der Umgebung des Messplatzes, sind kompensierbar. Damit ist die Messgenauigkeit auch bei mobiler Vorrichtung gewährleistet, auch wenn die Vorrichtung nur mäßig stabil am Messplatz befestigt ist, insbesondere dann, wenn die Kamera auf einem Stativ angeordnet ist.

Die Justage-Hilfseinrichtung ist für einen eine Radarsignalstrahlung ausstrahlenden Abstandssensor als Rückstrahlplatte ausgebildet. Als Fahrzeug-Umfeldsensor kann also ein Abstandsradar, das mit Radarstrahlen arbeitet, oder ein mit Licht arbeitender Lidarsensor Verwendung finden. Die Rückstrahlplatte, auch als Reflektor bezeichnet, reflektiert die Radarsignalstrahlung. Eine Lage der Rückstrahlplatte und eine Reflexionsrichtung sind mittels der drei an der Rückstrahlplatte angeordneten Messpunkte, die das Passpunktsystem bilden, definiert. Die zumindest drei Messpunkte werden mittels der Kamera erfasst und die Lage der Messpunkte und damit die Lage der Rückstrahlplatte bezüglich der Messplatzebene bestimmt. Die Rückstrahlplatte wird anhand der drei Messpunkte so justiert, dass die Reflexionsrichtung parallel der Fahrachse ausgerichtet ist. Die Radarsignalstrahlung wird vom Abstandssensor ausgestrahlt und die reflektierte Strahlung von einem Empfänger des Sensors wieder empfangen. Die Radarsignalstrahlung wird als Radarsignalkeule mit einer maximalen Strahlenstärke in der Keulenmitte ausgestrahlt.

Wird die Radarsignalstrahlung der Keulenmitte parallel der Fahrtrichtung ausgesandt, so sind Einfallswinkel und Ausfallswinkel der Radarsignalstrahlung der Keulenmitte an dem Reflektor 0 ° und die Stärke der empfangenen Strahlung erreicht ein Maximum. Da lediglich die Stärke der empfangenen Strahlung bekannt und die Dejustage unbekannt ist, ist zunächst einmal die Richtung der Justage zu ermitteln. Erst dann kann in eine richtige Richtung kompensiert werden.

Mit den Koordinaten der Fahrbahnebenen und der bekannten Fahrachse sowie der an der Rückstahlplatte reflektierten Radarsignalstrahlung ist eine Dejustage des Abstandssensors feststellbar und durch entsprechende Justage kompensierbar.

Die Messpunkte des Passpunktsystems sind messbare Punkte und werden auch als Passpunkte oder Merkmale bezeichnet. Als Merkmale sind markante Merkmale des Objektes, also des Kraftfahrzeuges oder der Rückstrahlplatte, oder künstlich aufgebrachte Merkmale verwendbar. Künstliche Merkmale werden auch als Adapter bezeichnet. Die vorzugsweise künstlich aufgebrachten Merkmale weisen eine geometrische Figur mit einem guten Kontrast zu der Umgebung auf. Geeignet sind kreisförmige, dreiecksförmige oder quadratische Merkmale. Die Merkmale können auch als Körper, zum Beispiel als Kugel, Kegel oder Zylinder ausgebildet sein.

Die Bildkoordinaten der auf dem Bildsensor abgebildeten Messpunkte werden durch an sich bekannte Methoden der Bildanalyse ermittelt. Dies betrifft sowohl die künstlichen Merkmale als auch an dem Objekt vorhandene Merkmale. Die Bildanalyse stützt sich auf die Erkennung zum Beispiel von Kanten, Mustern, Grauwerten oder Grauwertgradienten. In einem einfachen Beispiel ergeben sich die Bildkoordinaten eines kreisförmigen Messpunktes aus dem Schwerpunkt der Grauwerte seiner Abbildung auf dem Bildsensor.

Ist das Passpunktsystem auf einem mobilen Träger angeordnet, so ist der Träger in einfacher Weise auf einem Kraftfahrzeug aufsetzbar.

In vorteilhafter Weise ist eine genaue Positionierung des Trägers an dem Fahrzeug nicht notwendig, der Träger muss lediglich unverrutschbar und damit sicher befestigt sein. Dazu eignen sich Saugnäpfe oder Klebestreifen zur Befestigung des Trägers auf der Motorhaube.

In vorteilhafter Weise sind zwei der drei Messpunkte parallel der Fahrbahn ausrichtbar. Eine Verbindungslinie zwischen den zwei Messpunkten weist einen Winkel größer als Null zu der Fahrtrichtung auf. Vorzugsweise liegt die Verbindungslinie in Fahrzeugquerrichtung und senkrecht zur Fahrtrichtung. Ist der Messplatz nivelliert so können auch die beiden Messpunkte in einfacher Weise nivelliert sein. Die Nivellierung erfolgt mit einer Libelle oder einem elektronischen Neigungssensor. Durch Kenntnis der Messpunkte in dem lokalen Fahrzeugpasspunktsystem sind die Messpunkte von Bild zu Bild transformierbar, so dass alle Messpunkte nach Rückrechnung aller Punkte aller Bilder der Aufnahmesequenz zum Beispiel in das erste Bild, in einem gemeinsamen Koordinatensystem vorliegen. Aus diesem gemeinsamen Koordinatensystem kann das Fahrzeugkoordinatensystem abgeleitet werden, indem der Ursprung zum Beispiel durch den ersten nivellierten Punkt im ersten Bild festgelegt wird, weiterhin die X-Achse durch die Bewegung des ersten nivellierten Punktes und die X-Y-Ebene durch die Vorgabe, dass sich beide nivellierten Punkte in einer Ebene parallel zur Fahrbahnebene bewegt haben und somit die selbe Höhe über der Fahrbahn aufweisen.

In einfacher Weise weist die Auswerteeinrichtung eine Anzeigeeinheit auf. Dann sind notwendige Justageschritte auf der Anzeigeeinheit darstellbar. Insbesondere sind Anweisungen für die Justageschrauben des Abstandssensors darstellbar.

In einfacher Weise steuert die Auswerteeinrichtung einen Montageroboter zur Ausrichtung der Justage-Hilfseinrichtung, insbesondere der Rückstrahlplatte. Die Rückstrahlplatte wird so ausgerichtet, dass der Normalenvektor der Rückstrahlplatte parallel zu der Fahrachse und zur Fahrbahnebene liegt.

In einfacher Weise steuert die Auswerteeinrichtung einen Montageroboter zur Ausrichtung des Abstandssensors. Der Montageroboter wirkt direkt auf Justierschrauben des Abstandssensors ein und kompensiert eine Dejustage dieses Abstandssensors. Es ist möglich, für die Ausrichtung des Abstandssensors und der Justage-Hilfseinrichtung denselben Montageroboter zu verwenden. Alternativ dazu ist die Justage-Hilfseinrichtung auf ein Fahrgestell aufgesetzt, dass von der Auswerteeinrichtung ansteuerbar ist und die Justage-Hilfseinrichtung über den Messplatz verfährt und bezüglich der Fahrachse und der Fahrbahnebene ausrichtet.

Das Verfahren und die Vorrichtung sind entsprechend auch für die Justage weiterer Fahrzeug-Umfeldsensoren und Scheinwerfer einsetzbar. Als so genannte Justage-Hilfseinrichtung ist anstelle der Rückstrahlplatte eine optische Kalibriertafel für bildgebende Sensoren in oder an einem Fahrzeug, eine Lichtverteilung von Scheinwerfer erfassende Einrichtung, eine oder mehrere Reflektorplatten für Nahfeld-Radarsensoren oder Ultraschallsensoren einsetzbar. Damit wird gewährleistet, dass die Abstrahlrichtung immer zu der Fahrtrichtung und der Fahrbahnebene, das heißt immer in der vorgesehenen Richtung im Fahrzeugkoordinatensystem ausgerichtet ist.

Das Verfahren ermöglicht eine Justage des Abstandssensors, auch als Abstandsradar, Radarsensor oder kurz als Sensor bezeichnet. Damit ist gewährleistet, dass die Abstrahlrichtung immer zu der Fahrtrichtung und der Fahrbahnebene ausgerichtet werden kann. Aufgrund nicht zu vernachlässigbarer Toleranzen im Fahrzeugbau ist das Verfahren damit eine gute Möglichkeit zur Justage, entweder automatisiert in der Fertigung oder manuell in der Werkstatt. Sowohl die Abstandssensor- als auch die Fahrzeugfertigung unterliegen komplexen Prozessen, so dass auch unter optimalen Bedingungen eine Kette von Toleranzen entsteht, die zu einer nicht vernachlässigbaren Abweichung der Abstrahlrichtung des Sensors von der konstruktiv geplanten Richtung führt. Eine Justage ist damit unerlässlich. In der Werkstatt ist nach durchgeführten Karosserie- und/oder Fahrwerksreparaturen eine Überprüfung der Ausrichtung des Sensors und gegebenenfalls eine Justage zwingend notwendig. Die Justage ist hinsichtlich eines Nick-, Gier- und Wankwinkels durchführbar. Bei einem Sensor mit kegelförmiger Abstrahlung sind lediglich der Nick- und der Gierwinkel einzustellen, das Verfahren ist jedoch auf alle Winkel gleichermaßen anwendbar. Für Sensoren, die lediglich eine Einstellung des Nick- und Gierwinkels benötigen, entfällt die Notwendigkeit zur Nivellierung zweier Messpunkte quer zur Fahrtrichtung.

In einer ersten Variante ist die Rückstrahlplatte, auch als Rückstrahlwand bezeichnet, beweglich, das Fahrzeug fährt auf den Messplatz und die Rückstrahlwand fährt vor das Fahrzeug. Nach Dejustagekompensation fährt die Rückstrahlwand beiseite und das Fahrzeug verlässt den Messplatz in Vorwärtsfahrt. In einer zweiten Variante ist die ausrichtbare Rückstrahlwand ortsfest und das Fahrzeug fährt vor die Rückstrahlwand und verlässt den Messplatz durch Rückwärtsfahrt.

Zum besseren Verständnis der Erfindung sind nachfolgend Ausführungsbeispiele anhand der Zeichnung näher erläutert.

Es zeigen
Fig. 1 ein Kraftfahrzeug mit einem Passpunktsystem und eine Vorrichtung mit einer Kamera und einer Auswerteeinrichtung zum Ausrichten eines Abstandssensors an dem Fahrzeug auf einem Messplatz mittels einer ein Passpunktsystem aufweisenden Rückstrahlplatte in perspektivischer Darstellung,
Fig. 2 ein Passpunktsystem abgebildet auf einem Bildsensor einer Kamera in schematischer Darstellung und
Fig. 3 einen nivellierten mobilen Träger mit einem Passpunktsystem in perspektivischer Darstellung.

In den verschiedenen Figuren sind ähnliche oder dieselben Elemente durch gleiche Bezugszeichen bezeichnet.

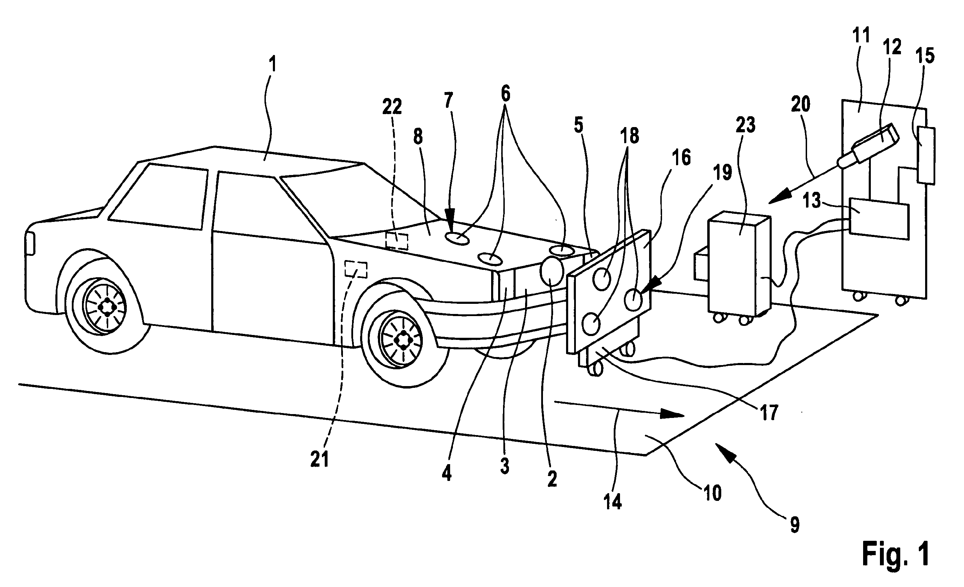

Fig. 1 zeigt ein Kraftfahrzeug 1 mit einem Abstandssensor 2 in einem Frontbereich 3, zwei Scheinwerfern 4, 5 und drei Messpunkte 6 eines Passpunktsystems 7 auf der Motorhaube 8. Das Kraftfahrzeug 1, kurz als Fahrzeug bezeichnet, steht auf einem Messplatz 9, der eine Messplatzebene 10, auch als Fahrbahnebene bezeichnet, aufweist. Der Messplatz 9 weist eine Vorrichtung 11 mit einer Kamera 12 und einer Auswerteeinrichtung 13 auf. Während einer Anfahrt des Fahrzeugs 1 auf den Messplatz 9 ist von der Kamera 12 eine Bewegungsbahn der Messpunkte 6 aufgezeichnet und daraus in der Auswerteeinrichtung 13 die Fahrbahnebene 10 und eine Fahrachse 14 bestimmt. Die Auswerteeinrichtung 13 steuert eine Anzeigeeinheit 15 an, auf der notwendige Verfahrensschritte darstellbar sind. Zwischen der Kamera 12 und dem Fahrzeug 1 ist eine Rückstrahlplatte 16 angeordnet. Die Rückstrahlplatte 16 sitzt auf einem Fahrgestell 17 auf, das von der Auswerteeinrichtung 13 ansteuerbar ist. Das Fahrgestell 17 ist als Roboter ausgebildet und in der Lage, die aufgesetzte Rückstrahlplatte 16 zu bewegen und auszurichten. Dazu weist die Rückstrahlplatte 16 drei Messpunkte 18 eines zweiten Passpunktsystems 19 auf, die von der Kamera 12 erfassbar sind. Die Kamera 12 weist eine optische z-Achse 20 auf. Mittels der Kamera 12, der Auswerteeinrichtung 13, des Fahrgestells 17 und der drei Messpunkte 18 ist die Rückstrahlplatte 16 senkrecht auf die Fahrachse 14 und Fahrbahnebene 10 ausrichtbar. Ein Empfänger des Abstandssensors 2 erkennt das reflektierte Signal und gibt über eine in dem Kraftfahrzeug 1 angeordnete Auswerteeinrichtung 21 Justagehinweise aus. Je stärker das empfangene Signal ist, umso besser ist der Sensor 2 ausgerichtet. Die Hinweise sind in einer Anzeigeeinheit 22 des Fahrzeugs 1 darstellbar. Die Hinweise betreffen auszuführende Umdrehungen für Justageschrauben des Sensors 2. Vorzugsweise kommuniziert die Auswerteeinrichtung 21 des Kraftfahrzeugs 1 mit der Auswerteeinrichtung 13 der Vorrichtung 11, so dass ein Montageroboter 23 auf die Justierschrauben des Abstandssensors 2 einwirkt und den Abstandssensor 2 ausrichtet und damit eine Dejustage kompensiert.

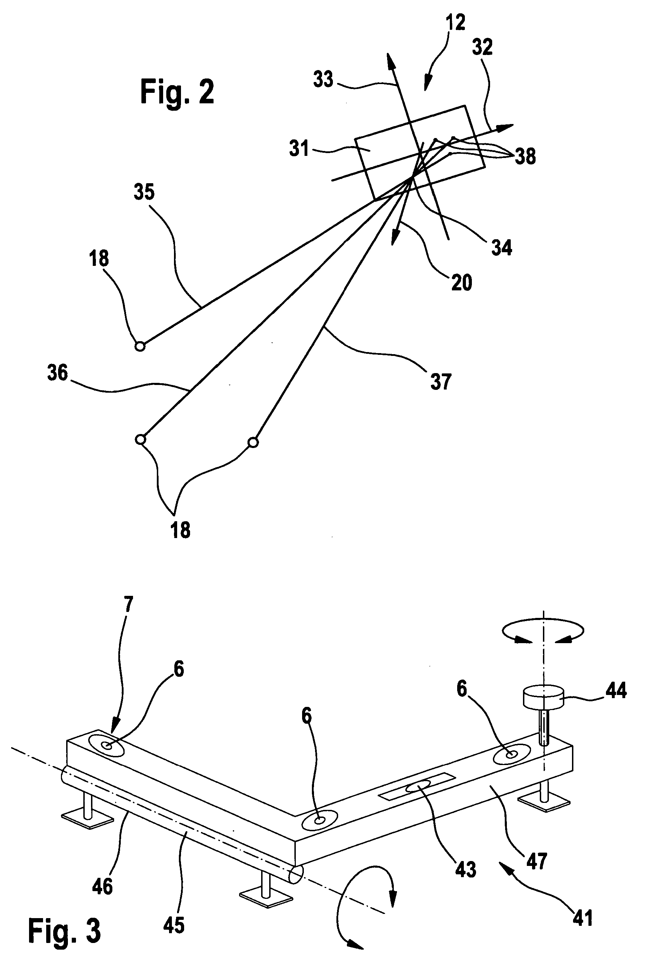

Figur 2 zeigt einen ebenen Bildsensor 31 der Kamera 12. Der Bildsensor 31 weist eine x- Achse 32, eine y-Achse 33 und die optische z-Achse 20 auf. In einem Projektionszentrum 34 bündeln sich Abbildungsstrahlen 35 - 37, mit deren Hilfe sich die Messpunkte 18 des Passpunktsystems 19 auf dem Bildsensor 31 als Bildpunkte 38 abbilden lassen. Aufgrund der Lage der Bildpunkte 38 auf dem Bildsensor 31 lässt sich anhand trigonometrischer Funktionen der Normalenvektor der Rückstrahlplatte 16 berechnen.

Figur 3 zeigt einen nivellierbaren mobilen Träger 41 mit einem Passpunktsystem 7. Das Passpunktsystem 7 weist die drei Messpunkte 6 auf. Mittels einer Libelle 43, auch als Linse oder Auge einer Wasserwaage bezeichnet, sind zwei der drei Messpunkte 6 auf dem Träger 41 ausrichtbar. Mittels einer Schraube 44 ist eine Neigung einstellbar und ein Gelenk 45 verbindet zwei gegeneinander bewegliche Teile 46, 47 des Trägers 41.

## Patentansprüche

1. Verfahren zum Ausrichten eines Fahrzeug-Umfeldsensors (2) oder Scheinwerfers (4, 5) an einem Fahrzeug (1) mittels einer Vorrichtung (11), die eine Kamera (12) und eine Auswerteeinrichtung (13) aufweist, mit folgenden Verfahrensschritten:
Daten zur Ermittlung einer Fahrbahnebene (10) und einer Fahrachse (14) de Fahrzeugs (1) werden mittels der Kamera (12) und dreier Messpunkte (6), die nicht auf eine Gerade liegen, eines Passpunktsystems (7) an dem Fahrzeug (1) während einer Anfahrt erfasst,
eine Fahrbahnebene (10) und eine Fahrachse (14) werden ermittelt,
eine Justage-Hilfseinrichtung (16) vor dem Fahrzeug-Umfeldsensor (2) oder Scheinwerfer (4, 5) des Fahrzeugs (1) wird mittels der Kamera (12) und mindestens dreier Messpunkte (18), die nicht auf eine Gerade liegen, eines zweiten Passpunktsystems (19) an der Justage-Hilfseinrichtung (16) bezüglich der Fahrachse (14) und der Fahrbahnebene (10) ausgerichtet,
eine Ausrichtung des Fahrzeug-Umfeldsensors (2) oder Scheinwerfers (4, 5) zur Justage-Hilfseinrichtung (16) wird ermittelt und
der Fahrzeug-Umfeldsensor (2) oder Scheinwerfer (4, 5) wird bei Vorliegen einer Fehlausrichtung ausgerichtet.

2. Verfahren nach Anspruch 1, **dadurch gekennzeichnet, dass** die Justage-Hilfseinrichtung (16) vor dem Fahrzeug-Umfeldsensor oder Scheinwerfer (4, 5) des Fahrzeugs (1) platzierbar ist.

3. Verfahren nach Anspruch 1, **dadurch gekennzeichnet, dass** als Messpunkte (6, 18) künstlich angeordnete Merkmale verwendet sind.

4. Verfahren nach Anspruch 1, **dadurch gekennzeichnet, dass** die drei Messpunkte (6) an dem Fahrzeug (1) auf einem mobilen Träger (41) angeordnet sind.

5. Verfahren nach Anspruch 4, **dadurch gekennzeichnet, dass** der Träger (41) Mittel aufweist, die eine rutschsichere Befestigung des mobilen Trägers (41) gewährleisten.

6. Verfahren nach einem oder mehreren der Ansprüche 1 bis 4, **dadurch gekennzeichnet, dass** zwei der drei Messpunkte (6) parallel der Fahrbahnebene (10) ausrichtbar sind.

7. Verfahren nach Anspruch 1, **dadurch gekennzeichnet, dass** die Auswerteeinrichtung (13) eine Anzeigeeinheit (15) aufweist.

8. Verfahren nach Anspruch 1, **dadurch gekennzeichnet, dass** die Auswerteeinrichtung (13) einen Montageroboter (23) zur Ausrichtung der Justage-Hilfseinrichtung (16) steuert.

9. Verfahren nach Anspruch 1, **dadurch gekennzeichnet, dass** die Auswerteeinrichtung (13) einen Montageroboter (23) zur Ausrichtung des Fahrzeug-Umfeldsensors (2) oder Scheinwerfers (4, 5) steuert.

10. Verfahren nach Anspruch 1, **dadurch gekennzeichnet, dass** die Auswerteeinrichtung (13) der Vorrichtung (11) mit einer Auswerteeinrichtung (21) des Fahrzeugs (1) kommuniziert.

11. Vorrichtung (11) mit einer Kamera (12) und einer Auswerteeinrichtung (13) zum Ausrichten eines Fahrzeug-Umfeldsensor (2) oder Scheinwerfers (4, 5) an einem Fahrzeug (1), wobei die Vorrichtung so Ausgebildet ist, dass Daten zur Ermittlung einer Fahrbahnebene (10) und einer Fahrachse (14) des Fahrzeugs (1) mittels der Kamera (12) und dreier Messpunkte (6), die nicht auf eine Gerade liegen, eines Passpunktsystems (7) an dem Fahrzeug (1) während einer Anfahrt erfasst werden, eine Fahrbahnebene (10) und eine Fahrachse (14) ermittelt werden sind, eine Justage-Hilfseinrichtung (16) vor dem Fahrzeug-Umfeldsensor (2) oder Scheinwerfer (4, 5) des Fahrzeugs (1) mittels der Kamera (12) und mindestens dreier Messpunkte (18), die nicht auf eine Gerade liegen, zweiten Passpunktsystems (19) an der Justage-Hilfseinrichtung (16) bezüglich der Fahrachse (14) und der Fahrbahnebene (10) ausrichtbar ist, eine Ausrichtung des Fahrzeug-Umfeldsensors (2) oder Scheinwerfers (4, 5) zur Justage-Hilfseinrichtung (16) ermittelbar ist und der Fahrzeug-Umfeldsensor (2) oder Scheinwerfer (4, 5) bei Vorliegen einer Fehlausrichtung ausrichtbar ist.

## Claims

1. Method for aligning a vehicle surroundings sensor (2) or headlight (4, 5) on a vehicle (1) by means of a device (11) which has a camera (12) and an evaluation apparatus (13), having the following method steps:
data for determining a carriageway plane (10) and a driving axis (14) of the vehicle (1) are acquired by means of the camera (12) and three measuring points (6), not located on a straight line, of a control point system (7) on the vehicle (1) during starting up,
a carriageway plane (10) and a driving axis (14) are determined,
an adjustment aid apparatus (16) in front of the vehicle surroundings sensor (2) or headlight (4, 5) of the vehicle (1) is aligned by means of the camera (12) and at least three measuring points (18), not located on a straight line, of a second control point system (19) on the adjustment aid apparatus (16) with respect to the driving axis (14) and the carriageway plane (10),
an alignment of the vehicle surroundings sensor (2) or headlight (4, 5) with respect to the adjustment aid apparatus (16) is determined, and
the vehicle surroundings sensor (2) or headlight (4, 5) is aligned when a misalignment is present.

2. Method according to Claim 1, **characterized in that** the adjustment aid apparatus (16) can be positioned in front of the vehicle surroundings sensor or headlight (4, 5) of the vehicle (1).

3. Method according to Claim 1, **characterized in that** artificially arranged features are used as measuring points (6, 18).

4. Method according to Claim 1, **characterized in that** the three measuring points (6) are arranged on a mobile carrier (41) on the vehicle (1).

5. Method according to Claim 4, **characterized in that** the carrier (41) has means which ensure slip-free attachment of the mobile carrier (41).

6. Method according to one or more of Claims 1 to 4, **characterized in that** two of the three measuring points (6) can be aligned parallel to the carriageway plane (10).

7. Method according to Claim 1, **characterized in that** the evaluation apparatus (13) has a display unit (15).

8. Method according to Claim 1, **characterized in that** the evaluation apparatus (13) controls an assembly robot (23) for aligning the adjustment aid apparatus (16).

9. Method according to Claim 1, **characterized in that** the evaluation apparatus (13) controls an assembly robot (23) for aligning the vehicle surroundings sensor (2) or headlight (4, 5).

10. Method according to Claim 1, **characterized in that** the evaluation apparatus (13) of the device (11) communicates with an evaluation apparatus (21) of the vehicle (1).

11. Device (11) having a camera (12) and an evaluation apparatus (13) for aligning a vehicle surroundings sensor (2) or headlight (4, 5) on a vehicle (1), wherein the apparatus is designed in such a way that data for determining a carriageway plane (10) and a driving axis (14) of the vehicle (1) are acquired by means of the camera (12) and three measuring points (6), not located on a straight line, of a control point system (7) on the vehicle (1) during starting up, a carriageway plane (10) and a driving axis (14) are determined, an adjustment aid apparatus (16) in front of the vehicle surroundings sensor (2) or headlight (4, 5) of the vehicle (1) can be aligned by means of the camera (12) and at least three measuring points (18), not located on a straight line, of a second control point system (19) on the adjustment aid apparatus (16) with respect to the driving axis (14) and the carriageway plane (10), an alignment of the vehicle surroundings sensor (2) or headlight (4, 5) with respect to the adjustment aid apparatus (16) can be determined, and the vehicle surroundings sensor (2) or headlight (4, 5) can be aligned when a misalignment is present.

## Revendications

1. Procédé d'orientation d'un détecteur (2) de l'environnement d'un véhicule ou d'un phare (4, 5) d'un véhicule (1) au moyen d'un ensemble (11) qui présente une caméra (12) et un dispositif d'évaluation (13), le procédé présentant les étapes suivantes :
pendant le démarrage, des données permettant de déterminer le plan (10) de la chaussée et l'axe (14) de déplacement du véhicule (1) sont saisies au moyen de la caméra (12) et de trois points de mesure (6) non colinéaires d'un système (7) de point d'adaptation prévu sur le véhicule (1),
le plan (10) de la chaussée et l'axe (14) de déplacement sont déterminés,
un dispositif auxiliaire d'ajustement (16) disposé en avant du détecteur (2) de l'environnement du véhicule ou du phare (4, 5) du véhicule (1) est orienté par rapport à l'axe de déplacement (14) et au plan (10) de la chaussée au moyen de la caméra (12) et d'au moins trois points de mesure (18) non colinéaires d'un deuxième système (19) de point d'adaptation du dispositif auxiliaire d'ajustement (16),
l'orientation du détecteur (2) de l'environnement du véhicule ou du phare (4, 5) par rapport au dispositif auxiliaire d'ajustement (16) est déterminée et
en cas d'erreur d'ajustement, le détecteur (2) de l'environnement du véhicule ou le phare (4, 5) sont orientés.

2. Procédé selon la revendication 1, **caractérisé en ce que** le dispositif auxiliaire d'ajustement (16) peut être placé en avant du détecteur de l'environnement du véhicule ou du phare (4, 5) du véhicule (1).

3. Procédé selon la revendication 1, **caractérisé en ce que** des caractéristiques disposées artificiellement sont utilisées comme points de mesure (6, 18).

4. Procédé selon la revendication 1, **caractérisé en ce que** les trois points de mesure (6) sont disposés sur un support mobile (41) prévu sur le véhicule (1).

5. Procédé selon la revendication 4, **caractérisé en ce que** le support (41) présente des moyens qui garantissent une fixation protégée contre le glissement du support mobile (41).

6. Procédé selon l'une ou plusieurs des revendications 1 à 4, **caractérisé en ce que** deux des trois points de mesure (6) peuvent être orientés parallèlement au plan (10) de la chaussée.

7. Procédé selon la revendication 1, **caractérisé en ce que** le dispositif d'évaluation (13) présente une unité d'affichage (15).

8. Procédé selon la revendication 1, **caractérisé en ce que** le dispositif d'évaluation (13) commande un robot de montage (23) qui oriente le dispositif auxiliaire d'ajustement (16).

9. Procédé selon la revendication 1, **caractérisé en ce que** le dispositif d'évaluation (13) commande un robot de montage (23) qui oriente le détecteur (2) de l'environnement du véhicule ou du phare (4, 5).

10. Procédé selon la revendication 1, **caractérisé en ce que** le dispositif d'évaluation (13) de l'ensemble (11) communique avec le dispositif d'évaluation (21) du véhicule (1).

11. Ensemble (11) doté d'une caméra (12) et d'un dispositif d'évaluation (13), pour orienter un détecteur (2) de l'environnement d'un véhicule ou du phare (4, 5) du véhicule (1), le dispositif étant configuré de telle sorte que des données permettant de déterminer le plan (10) de la chaussée et l'axe (14) du déplacement du véhicule (1) au moyen de la caméra (12) et de trois points de mesure (6) non colinéaires d'un système (7) de point d'adaptation prévu sur le véhicule (1) sont saisies lors du démarrage, le plan (10) de la chaussée et l'axe (14) de déplacement étant déterminés, un dispositif auxiliaire d'ajustement (16) disposé en avant du détecteur (2) de l'environnement du véhicule ou du phare (4, 5) du véhicule (1) pouvant être orienté par rapport à l'axe (14) du déplacement et au plan (10) de la chaussée au moyen de la caméra (12) et d'au moins trois points de mesure (18) non colinéaires d'un deuxième système (19) de point d'adaptation prévu sur le dispositif auxiliaire d'ajustement (16), l'orientation du détecteur (2) de l'environnement du véhicule ou du phare (4, 5) par rapport au dispositif auxiliaire d'ajustement (16) pouvant être déterminée et le détecteur (2) de l'environnement du véhicule ou le phare (4, 5) pouvant être orientés en cas de défaut d'orientation.
